# EUROPÄISCHE PATENTSCHRIFT

(11) **EP 3 831 176 B1**
(45) Veröffentlichungstag und Bekanntmachung des Hinweises auf die Patenterteilung: **07.06.2023**
(21) Anmeldenummer: 20401061.5
(22) Anmeldetag: 03.12.2020
(51) Int. Cl.: A01B 61/04

(54) **AUFHÄNGUNGSVORRICHTUNG**
SUSPENSION DEVICE
DISPOSITIF DE SUSPENSION

(30) Priorität: 06.12.2019 DE 102019133304
(43) Veröffentlichungstag der Anmeldung: 09.06.2021
(73) Patentinhaber: Amazonen-Werke H. Dreyer SE & Co. KG, 49205 Hasbergen (DE)
(72) Erfinder: Scherf, Silvio, 39444 Hecklingen OT Cochstedt (DE); Asmuß, Stefan, 04275 Leipzig (DE)

(56) Entgegenhaltungen:
- EP-A1- 2 965 602
- DE-A1- 10 358 208
- DE-A1-102016 110 285
- FR-A1- 3 007 935
- SE-C2- 534 357

## Beschreibung

Die Erfindung betrifft eine Aufhängungsvorrichtung gemäß dem Oberbegriff des Patentanspruches 1 und ein landwirtschaftliches Arbeitsgerät gemäß dem Oberbegriff des Patentanspruches 15.

In einer Vielzahl von Anwendungsfällen, insbesondere in der Landwirtschaft, werden zur Bearbeitung einer landwirtschaftlichen Fläche Arbeitsgeräte mit zumindest einem an einem Rahmen angeordneten Werkzeug eingesetzt. Die Arbeitsgeräte können hierbei vorzugsweise mittels eines landwirtschaftlichen Schleppers gezogen und/oder an einem landwirtschaftlichen Schlepper anbaubar ausgeführt sein. Zum Einsatz für derartige Anwendungsfälle können beispielhaft landwirtschaftliche Ausbringmaschinen für Dünger und/oder Saatgut, insbesondere Einzelkornsämaschinen, und/oder Bodenbearbeitungsgeräte genannt werden. Typischerweise können derartige Bodenbearbeitungsgeräte neben Scharen, insbesondere in Form von Grubber- und/oder Pflugscharen, auch Scheibenschare, insbesondere Sä- und/oder Düngerscheibenschare, umfassen. Darüber hinaus sind hierunter außerdem auch Eggen und/oder Abstreifer und/oder Walzen zu verstehen.

Die genannten Werkzeuge sind insbesondere im in den Boden eingreifenden Zustand sehr hohen Belastungen ausgesetzt. Diese Belastungen können beispielsweise durch Hindernisse und/oder starke Bodenverdichtungen auf der zu bearbeitenden Fläche zusätzlich verstärkt werden. Zur Vermeidung von Beschädigungen an den Scharen und/oder dem Arbeitsgerät weisen derartige Arbeitsgeräte zumindest eine Aufhängungsvorrichtung auf, die dazu eingerichtet ist, dass Werkzeug im Falle einer darauf wirkenden Überlast zumindest teilweise beweglich und/oder verschwenkbar zu lagern.

Typischerweise umfassen bisherige Aufhängungsvorrichtungen hierzu Federsysteme, insbesondere Blattfedern und/oder Schraubenfedern, und/oder mit Gummielementen bestückte Lagerkörper die zumindest teilweise mit dem Werkzeug gekoppelt sind.

Eine derartige Aufhängungsvorrichtung ist in der DE 103 58 208 A1 beschrieben. Ein Bodenbearbeitungswerkzeug ist hierbei über einen Schwenkarm und einen damit gekoppelten ersten Lagerkörper gegenüber zumindest einen mit dem Rahmen des Arbeitsgerätes starr verbundenen Teil der Aufhängungsvorrichtung schwenkbar gelagert. Der erste Lagerkörper ist aus zumindest zwei Schalenelementen gebildet, die quer zu einer Fahrtrichtung ausgerichtet sind. Darüber hinaus umfasst die Aufhängungsvorrichtung zumindest einen Schwenkträger der zumindest teilweise innerhalb des ersten Lagerkörpers angeordnet ist. Die Aufhängungsvorrichtung weist außerdem zumindest ein zwischen dem ersten Lagerkörper und dem Schwenkträger angeordnetes, vorzugsweise aus einem Kunststoff- und/oder Gummimaterial ausgebildetes, elastisches Lagerelement auf, das hierbei in Längsrichtung des ersten Lagerkörpers ausgerichtet ist.

Gegenüber Blatt- und/oder Schraubenfedern weist ein solcher Aufbau den Vorteil auf, dass dieser nahezu verschleißfrei ist und damit eine zumindest nahezu unbegrenzte Lebensdauer aufweist. Nachteilig hierbei ist, dass mit diesem Aufbau nur relativ kleine Verschwenkungswinkel des Werkzeuges gegenüber dem am Rahmen befestigten Teil der Aufhängungsvorrichtung erreichbar sind. Gerade bei großen Hindernissen und/oder Bodenwellen kann dies zu einer dauerhaften Beschädigung des Werkzeuges und/oder der Aufhängungsvorrichtung und/oder des Arbeitsgerätes führen.

Die der Erfindung zugrunde liegende Aufgabe besteht somit darin, eine Aufhängungsvorrichtung mit reduziertem Verschleiß und Eignung für große Verschwenkungswinkel zu schaffen.

Diese Aufgabe wird erfindungsgemäß dadurch gelöst, dass zumindest ein, vorzugsweise in Längsrichtung des ersten Lagerkörpers erstreckender, zweiter Lagerkörper, der zumindest teilweise innerhalb des ersten Lagerkörpers angeordnet und um seine Längsachse schwenkbar gelagert ist, wobei zwischen dem Schwenkträger und dem zweiten Lagerkörper zumindest ein zweites elastisches Lagerelement, vorzugsweise aus einem Kunststoff- und/oder Gummimaterial, angeordnet ist.

Die Erfindung macht sich die Erkenntnis zunutze, dass der Verschwenkungswinkel, insbesondere eine Gesamtverschwenkung, zumindest eines Bodenbearbeitungswerkzeuges gegenüber zumindest dem am Rahmen befestigten Teil der Aufhängungsvorrichtung anteilig auf in Reihe angeordneter Lagerkörper und elastischer Lagerelemente, mittels derer das Bodenbearbeitungswerkzeug gelagert ist, aufteilbar ist. Diese Anordnung ist mit einer Reihenschaltung von Federelementen vergleichbar. Somit ist erreicht, dass der zumindest eine erste Lagerkörper und zumindest eine weitere, insbesondere zweite, Lagerkörper nur zu einem bestimmten Anteil der Gesamtverschwenkung des Bodenbearbeitungswerkzeuges verschwenkbar ist. Die Anzahl der in Reihe angeordneten Lagerkörper und/oder Lagerelemente ist hierbei soweit erhöhbar, bis der erforderliche Verschwenkungswinkel mittels der Aufhängungsvorrichtung erreichbar ist. In der bevorzugten mehrteiligen Ausführungsform des ersten Lagerkörpers sind die Schalenelemente kraft- und/oder formschlüssig, vorzugsweise mittels einer Schraubverbindung, miteinander verbunden. Dies ist insbesondere bei der Montage und/oder Demontage, beispielsweise während Wartungsarbeiten, der Aufhängungsvorrichtung vorteilhaft.

Die ersten und/oder zweiten Lagerelemente weisen bevorzugt eine Länge auf, die in etwa mit der Länge der jeweiligen Lagerkörper zumindest nahezu übereinstimmend ausgebildet ist. Somit ist eine besonders stabile Lage der Lagerkörper in Längsrichtung auf den Lagerelementen erreicht. Alternativ sind auch Lagerelemente denkbar, die eine größere Länge als die dazu zugeordneten Lagerkörper aufweisen. Darüber hinaus sind Erhebungen an den Enden der Lagerelemente denkbar, die die Lage der jeweiligen Lagerelemente innerhalb des Lagerkörpers sichern und somit einem Verrutschen innerhalb des Lagerkörpers vorbeugen.

In einer bevorzugten Ausführungsform umfasst die erfindungsgemäße Aufhängungsvorrichtung zumindest ein erstes Lagerelement das zwischen dem ersten und zweiten Lagerkörper angeordnet ist, wobei der zweite Lagerkörper mittels des zumindest einen ersten und/oder zweiten Lagerelementes schwenkbar innerhalb des ersten Lagerkörpers gelagert ist. Die Form und/oder Anzahl und/oder Aufteilung des zumindest einen ersten Lagerelementes ist dabei so gewählt, dass der zweite Lagerkörper bevorzugt über das zumindest eine erste Lagerelement mit dem ersten Lagerkörper gekoppelt ist. Der zweite Lagerkörper ist hierbei derart innerhalb des zumindest einen ersten Lagerelementes gelagert, dass die Längs- und/oder Schwenkachse des zweiten Lagerkörpers mit der Längsachse und/oder Schwenkachse des ersten Lagerkörpers zumindest teilweise korrespondiert und/oder vorzugsweise mit dieser eine Konzentrizität aufweist. Somit ist eine nahezu gleichmäßige Kräfteverteilung mit nahezu ausgeschlossener Unwucht innerhalb der Aufhängungsvorrichtung erreicht.

Die Schwenkbewegung des zumindest einen zweiten Lagerkörpers ist in vorteilhafterweise zumindest teilweise von dem zumindest einen, insbesondere äußeren, ersten Lagerelement und/oder dem zumindest einen, insbesondere inneren, zweiten Lagerelement beeinflussbar.

In einer Weiterbildung der erfindungsgemäßen Aufhängungsvorrichtung ist der Schwenkträger mittels des zumindest einen zweiten Lagerelementes, vorzugsweise schwenkbar gelagert, innerhalb des zweiten Lagerkörpers angeordnet. Unter einem innerhalb des zumindest einen zweiten Lagerkörpers, vorzugsweise schwenkbar gelagert, angeordneten Schwenkträger ist hierbei ein um seine eigene Längsachse starr angeordneter Schwenkträger zu verstehen. In einer alternativen Ausführungsform ist der Schwenkträger aber auch um seine eigene Längsachse schwenkbar ausführbar. Die Form und/oder Anzahl und/oder Aufteilung des zumindest einen zweiten Lagerelementes ist dabei so gewählt, dass der Schwenkträger bevorzugt über das zumindest eine zweite Lagerelement, insbesondere gelagert, angeordnet und mit dem zweiten Lagerkörper gekoppelt ist. Die über den ersten Lagerkörper einleitbare Verschwenkung ist hierbei anteilig vom ersten und zweiten Lagerelement und/oder Lagerkörper aufnehmbar. Die äußere Form des Schwenkträgers ist bevorzugt im Wesentlichen korrespondierend zum zweiten Lagerkörper ausgeführt, wobei die äußeren Abmessungen des Querschnittes vom Betrag kleiner sind als die des zumindest einen ersten und/oder zweiten Lagerkörpers. Alternativ ist denkbar, dass der Querschnitt des Schwenkträgers eine vom ersten und/oder zweiten Lagerkörper abweichende Form aufweist, die beispielsweise kreis- und/oder polygonförmig, vorzugsweise im Wesentlichen dreiecksförmig, ausgebildet ist.

In dieser Ausführungsform ist der Schwenkträger relativ zum Rahmen des Arbeitsgerätes, insbesondere um seine Längsachse, bevorzugt feststehend oder alternativ schwenkbar ausgeführt.

In einer anderen bevorzugten Ausführungsform der erfindungsgemäßen Aufhängungsvorrichtung ist der zumindest eine zweite Lagerkörper zumindest teilweise mehrteilig, vorzugsweise aus zumindest zwei Schalenelementen, ausgebildet. Die Form, insbesondere der Querschnitt, des zumindest einen zweiten Lagerkörpers weißt bevorzugt eine im wesentliche mehreckige, insbesondere rechteckige oder dreieckige, Profilform auf. Die Scheitelpunkte, insbesondere Eckpunkte, zumindest zweier ineinander übergehender geraden Querschnittsabschnitte sind hierbei bevorzugt zumindest teilweise abgerundet. Des Weiteren ist der zweite Lagerkörper vorzugsweise aus spiegelsymmetrischen Teilen, insbesondere Schalenelementen, und/oder Gleichteilen zusammensetzbar. Somit ist neben einer vereinfachten Montage außerdem eine besonders günstige Herstellbarkeit erreichbar.

In einer anderen bevorzugten Weiterbildung der erfindungsgemäßen Aufhängungsvorrichtung sind die mehreren Teile, insbesondere Schalenelemente, die den zumindest einen zweiten Lagerkörper bilden zumindest teilweise form- und/oder kraftschlüssig miteinander koppelbar. Die Verbindung zwischen den mehreren Teilen des zweiten Lagerkörpers ist bevorzugt derartig ausgebildet, dass eine zumindest nahezu werkzeuglose Montage und/oder Demontage realisierbar ist. Darüber hinaus ist es vorteilhaft wenn die miteinander verbindbaren Teile hierbei zerstörungsfrei voneinander lösbar sind. Somit ist die Montage bzw. Demontage des zweiten Lagerkörpers noch weiter vereinfacht.

Alternativ ist denkbar, dass die miteinander verbindbaren Teile des zumindest einen zweiten Lagerkörpers mittels zumindest einer Schraubverbindung miteinander koppelbar sind.

In einer anderen bevorzugten Ausführungsform umfasst die erfindungsgemäße Aufhängungsvorrichtung zumindest einen weiteren, vorzugsweise in Längsrichtung des ersten Lagerkörpers erstreckenden, Lagerkörper und zumindest ein weiteres elastisches Lagerelement, vorzugsweise aus einem Kunststoff- und/oder Gummimaterial, wobei das zumindest eine weitere Lagerelement vorzugsweise zumindest teilweise innerhalb des zweiten Lagerkörpers angeordnet ist. Hiermit ist eine nochmals weiter auf die jeweiligen Lagerelemente und/oder Lagerkörper anteilig aufteilbarer Verschwenkungsweg des Werkzeuges erreichbar.

Die äußere Querschnittsform des zumindest einen weiteren Lagerkörpers und/oder Lagerelementes ist hierbei bevorzugt im Wesentlichen zumindest teilweise korrespondierend zu dem zumindest einen zweiten Lagerkörper und/oder Lagerelement ausgebildet. Alternativ hierzu ist denkbar, dass die äußere Querschnittsform des zumindest einen weiteren Lagerkörpers und/oder Lagerelementes eine zum zweiten Lagerkörper und/oder Lagerelement abweichende Form aufweist, die beispielsweise kreis- und/oder polygonförmig, vorzugsweise im Wesentlichen dreiecksförmig, ausgebildet ist.

In einer anderen Weiterbildung der erfindungsgemäßen Aufhängungsvorrichtung ist der zumindest eine weitere Lagerkörper zwischen dem zweiten Lagerkörper und dem Schwenkträger angeordnet und um seine Längsachse schwenkbar gelagert. Die Längsachse des zumindest einen weiteren Lagerkörpers ist dabei zumindest teilweise korrespondierend und/oder konzentrisch zur Längsachse des zweiten Lagerkörpers ausgerichtet. Die Lagerelemente sind bevorzugt derartig ausgebildet, dass der Verschwenkungswinkel des zumindest einen weiteren Lagerkörpers mit dem des zumindest einen zweiten Lagerkörpers nahezu übereinstimmt. Alternativ ist denkbar, dass der Verschwenkungswinkel anteilig einen größeren Betrag aufweist als der des zweiten Lagerkörpers. Hierüber ist ein individuell abstimmbarer Verschwenkungsweg des Werkzeuges erreicht.

Je nach Auslegung der Ausführungsform ist die Schwenkbewegung des Werkzeuges über den zumindest einen ersten Lagerkörper oder den zumindest einen Schwenkträger in die Aufhängungsvorrichtung einleitbar. Bei einer Verschwenkung des ersten Lagerkörpers ist eine Drehbewegung über das zumindest eine erste Lagerelement in den zumindest einen zweiten Lagerkörper überführbar. Daran anschließend ist die Drehbewegung über das zumindest eine zweite Lagerelement, den zumindest einen weiteren Lagerkörper und das zumindest eine weitere Lagerelement in den Schwenkträger einleitbar und/oder von dem zumindest einen Schwenkträger zumindest teilweise aufnehmbar.

Alternativ hierzu ist die Verschwenkung des Werkzeuges in einen, vorzugsweise um seine Längsachse, schwenkbar gelagerten Schwenkträger einleitbar. Der Schwenkträger ist hierbei zumindest teilweise durch das zumindest eine weitere Lagerelement geführt, wobei die Verschwenkung zumindest teilweise in den zumindest einen weiteren Lagerkörper übertragbar ist. Daran anschließend ist die Verschwenkung über das zumindest eine zweite Lagerelement, den zumindest einen zweiten Lagerkörper und das zumindest eine erste Lagerelement in den zumindest einen ersten Lagerkörper einleitbar und/oder von dem zumindest einen ersten Lagerkörper zumindest teilweise aufnehmbar.

In einer weiteren bevorzugten Ausführungsform weist die erfindungsgemäße Aufhängungsvorrichtung zumindest ein Lagerelement mit einem im Wesentlichen kreisförmigen Querschnitt auf, wobei das zumindest eine Lagerelement vorzugsweise länglich ausgebildet ist. Hiermit ist erreicht, dass eine zwischen dem Lagerelement und dem Lagerkörper und/oder Schwenkträger resultierende Federkraft einen nahezu homogenen Verlauf aufweist. Die Federkraft ist somit nahezu unabhängig von der Ausrichtung und/oder Lage der Lagerelemente. Die längliche Form der Lagerelemente ermöglicht eine besonders stabile Lage der Lagerkörper auf den Lagerelementen.

Darüber hinaus sind die Lagerelemente aus einem Vollmaterial bevorzugt, wobei alternativ auch ein ringförmiger, insbesondere kreisringförmiger, Querschnitt denkbar ist.

In einer anderen bevorzugten Weiterbildung der erfindungsgemäßen Aufhängungsvorrichtung ist zumindest ein Lagerelement im Querschnitt gesehen polygonförmig, insbesondere dreiecksförmig, ausgebildet, wobei die Scheitel, insbesondere Eckpunkte, zumindest teilweise abgerundet sind. Besonders vorteilhaft ist hierbei zumindest ein Randbereich, insbesondere Scheitel oder Eckpunkt, des zumindest einen Lagerelementes der korrespondierend zu einem Scheitel, insbesondere Eckpunkt, zumindest eines Lagerkörpers ausgebildet ist. Somit ist eine besonders sichere und nahezu abrutsch- und/oder verdrehsichere Variante des zumindest einen Lagerelementes innerhalb zumindest eines Lagerkörpers erreicht.

In einer weiteren Weiterbildung der erfindungsgemäßen Aufhängungsvorrichtung ist zumindest ein Lagerelement in Abhängigkeit seiner Elastizität und der Verschwenkung des zumindest einen mit der Aufhängungsvorrichtung gekoppelten Werkzeuges elastisch verformbar. Die jeweiligen Lagerelemente weisen hierbei vorzugsweise eine nahezu einheitliche Elastizität auf. Der Querschnitt der Lagerelemente ist somit in Abhängigkeit der Verschwenkung der Lagerkörper und/oder des Werkzeuges anpassbar. Darüber hinaus weisen die Lagerelemente somit eine zumindest teilweise vibrationsdämpfende Eigenschaft auf. Vibrationen, die beispielsweise von der zu bearbeitenden Fläche in das Werkzeug einleitbar sind, sind mittels der elastischen Lagerelemente nahezu vollständig von der Aufhängungsvorrichtung aufnehmbar.

Außerdem ist denkbar, dass das Werkzeug und/oder die Aufhängungsvorrichtung gegenüber dem Rahmen mittels einer Vorspannvorrichtung, insbesondere einem mechanischen Anschlag, vorspannbar sind. Die einzelnen Lagerkörper und/oder Lagerelemente sind hierbei in einer nicht in den Boden eingreifenden Situation bereits aus ihrer Ausgangslage verschwenkbar, sodass eine auf den Bedarf abgestimmte Federkennlinie der elastischen Lagerelemente realisierbar ist.

Darüber hinaus ist eine erfindungsgemäße Aufhängungsvorrichtung bevorzugt bei der der Schwenkarm über den ersten Lagerkörper mit der Aufhängungsvorrichtung gekoppelt ist. Der Schwenkarm ist hierbei mit dem ersten Lagerkörper und der Rahmen mit dem Schwenkträger zumindest teilweise kraft- und/oder form- und/oder stoffschlüssig verbunden. Die vom Werkzeug in den Schwenkarm einleitbare Kraft und/oder Verschwenkung ist somit über den ersten Lagerkörper in die Aufhängungsvorrichtung und damit in den Rahmen übertragbar. Diese Ausführungsform erlaubt einen besonders einfachen Austausch und/oder eine Erweiterung der Aufhängungsvorrichtung mit zusätzlichen oder reduzierten Lagerkörpern und/oder Lagerelementen. Hierdurch ist eine besonders einfache und schnelle Anpassung der Aufhängungsvorrichtung erreichbar.

Gegenüber dem Rahmen des Arbeitsgerätes sind die einzelnen Lagerkörper und/oder Lagerelemente hierbei bevorzugt zumindest teilweise schwenkbar ausgebildet. Der Schwenkträger ist dabei zumindest teilweise, insbesondere um seine Längsachse, feststehend zum Rahmen ausgeführt.

In einer anderen bevorzugten Ausführungsform der erfindungsgemäßen Aufhängungsvorrichtung ist der Schwenkarm über den Schwenkträger mit der Aufhängungsvorrichtung gekoppelt. Der Schwenkarm kann hierbei mit dem Schwenkträger und der Rahmen mit dem ersten Lagerkörper zumindest teilweise kraft- und/oder formschlüssig und/oder stoffschlüssig verbunden sein. Hierbei ist eine zumindest teilweise als Schweißverbindung ausgebildete stoffschlüssige Verbindung besonders bevorzugt. Alternativ ist eine mittels zumindest einer Schraubverbindung ausgebildete Verbindung zwischen Schwenkarm und Schwenkträger realisierbar. Ausgehend von dem Werkzeug und/oder dem Schwenkarm ist mittels dieser Anordnung die auf dem Werkzeug angreifende Kraft somit über den Schwenkträger in die Aufhängungsvorrichtung einleitbar. Der Schwenkträger ist hierbei zumindest teilweise schwenkbar gegenüber dem Rahmen des Arbeitsgerätes ausgeführt. Der zumindest eine erste Lagerkörper ist hierzu zumindest teilweise feststehend gegenüber dem Rahmen ausgebildet.

Alternativ zu den vorgenannten Ausführungsformen ist denkbar, dass das Werkzeug direkt, insbesondere ohne Schwenkarm, mit dem zumindest einen ersten Lagerkörper oder dem zumindest einen Schwenkträger gekoppelt ist.

Des Weiteren ist eine Sensoranordnung denkbar, die dazu eingerichtet ist, die Verschwenkung der jeweiligen Lagerkörper und/oder Lagerelemente und/oder Schwenkträger zu erfassen und diese an eine Ausgabe- und/oder Auswerteeinheit zu übergeben. Hierdurch ist erreicht, dass beispielsweise die Lage und/oder Belastung der Werkzeuge und/oder Aufhängungsvorrichtung für einen Bediener ablesbar bereitgestellt werden kann. Darüber hinaus ist eine zusätzliche Aktorik vorstellbar, die dazu eingerichtet ist, die Werkzeuge vor dem Überschreiten einer bestimmten Überlast aus dem Eingriff des Arbeitsprozesses herauszuheben bzw. zu verschwenken.

Die der Erfindung zugrunde liegende Aufgabe wird ferner durch ein landwirtschaftliches Arbeitsgerät der eingangs genannten Art gelöst, wobei die Aufhängungsvorrichtung nach einer der vorstehenden beschriebenen Ausführungsformen ausgebildet ist. Hinsichtlich der Vorteile und Modifikationen des erfindungsgemäßen landwirtschaftlichen Arbeitsgerätes wird zunächst auf die Vorteile und Modifikationen der erfindungsgemäßen Aufhängungsvorrichtung verwiesen.

Weitere Einzelheiten der Erfindung sind der Beispielsbeschreibung und den Zeichnungen zu entnehmen. Die Zeichnungen zeigen
- Fig. 1: an einem Rahmen eines Arbeitsgerätes mittels erfindungsgemäßer Aufhängungsvorrichtungen angeordnete Bodenbearbeitungswerkzeuge eines Grubbers in perspektivischer Darstellung;
- Fig. 2: ein Bodenbearbeitungswerkzeug mit der erfindungsgemäßen Aufhängungsvorrichtung aus Fig. 1 in einer vorgespannten Ausgangslage in Seitenansicht;
- Fig. 3: ein Bodenbearbeitungswerkzeug mit der erfindungsgemäßen Aufhängungsvorrichtung aus Fig. 1 in einem verschwenkten Zustand in Seitenansicht;
- Fig. 4: die erfindungsgemäße Aufhängungsvorrichtung aus Fig. 3 in einer vergrößerten Darstellung; und
- Fig. 5: eine erfindungsgemäße Ausführungsform eines zweiten Lagerkörpers in einer perspektivischen Explosionsdarstellung.

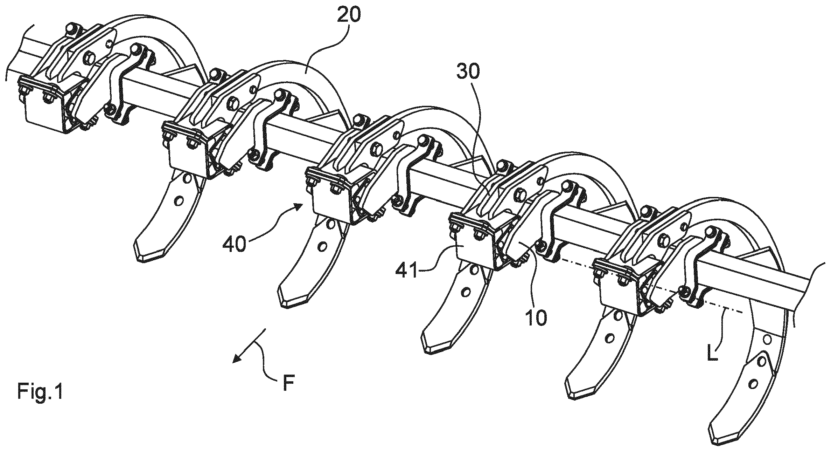

Mehrere an einem Rahmen 10 eines nicht dargestellten landwirtschaftlichen Arbeitsgerätes angeordnete Bodenbearbeitungswerkzeuge 20, die quer zu einer Fahrtrichtung F ausgerichtet sind, sind in der Fig. 1 gezeigt. Die zur Bearbeitung einer landwirtschaftlichen Fläche als Grubberzinken ausgebildeten Werkzeuge 20 sind mittels einer Aufhängungsvorrichtung 40 mit dem Rahmen 10 gekoppelt. Alternativ zur dargestellten Ausführungsform kann das Bodenbearbeitungswerkzeug 20 beispielsweise als Scheibenschar ausgebildet sein.

Zur Vermeidung von Beschädigungen am Werkzeug 20 und/oder am nicht gezeigten Arbeitsgerät aufgrund von Hindernissen und/oder stark verdichteten Böden innerhalb einer zu bearbeitenden Fläche ist die Aufhängungsvorrichtung 40 dazu eingerichtet, dass Werkzeug 20 gegenüber dem Rahmen 10 und zumindest einem starr mit dem Rahmen 10 verbundenen Teil der Aufhängungsvorrichtung 40 schwenkbar zu lagern. Somit ist eine Verschwenkung des zumindest einen Werkzeuges 20 infolge einer am Werkzeug 20 angreifenden Kraft K, die größer als eine für das Werkzeug 20 und die Aufhängungsvorrichtung 40 zulässigen Kraft ist, erreicht. Mittels einer somit realisierbaren Schwenkbewegung des Werkzeuges 20 ist die Größe der angreifenden Kraft K zumindest teilweise oder vorzugsweise bis zu einer zulässigen Größe reduzierbar und/oder kompensierbar.

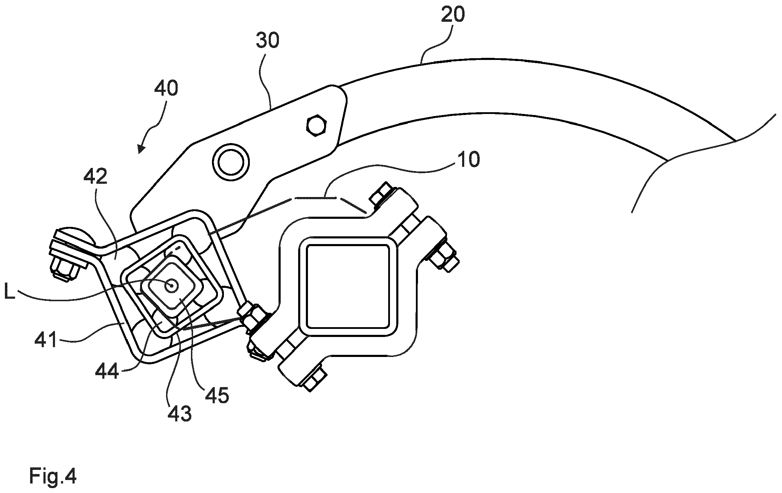

Zur Übertragung der Kraft K und/oder der Schwenkbewegung ist das Werkzeug 20 mittels einer Schraubverbindung an einem Schwenkarm 30 befestigt. Der Schwenkarm 30 überträgt die eingeleitete Kraft K und/oder die Schwenkbewegung des Werkzeuges 20 über eine stoffschlüssige Verbindung an einen aus zwei Schalenelementen gebildeten ersten Lagerkörper 41, der mit seiner Längsachse L quer zur Fahrtrichtung F ausgerichtet ist. Der Rahmen 10 ist über eine lösbare Schraubenverbindung mit einem innerhalb des ersten Lagerkörpers 41 angeordneten Schwenkträger 45 verbunden, wie Fig.4 zeigt. Die gegenseitige Verschwenkung zwischen dem Schwenkträger 45 und dem ersten Lagerkörper 41 ist hierbei mittels vier innerhalb des ersten Lagerkörpers 41 angeordneter aus einem elastischen Gummimaterial gebildeter erster Lagerelemente 42 erreichbar.

In einer alternativen Ausführungsform kann die Aufhängungsvorrichtung 40 derartig ausgebildet sein, dass das Werkzeug 20 über den Schwenkarm 30 mit dem Schwenkträger 45 und der erste Lagerkörper 41 mit dem Rahmen 10 verbunden ist. Hierbei ist der Schwenkträger 45, insbesondere um die Längsachse L, schwenkbar gegenüber dem Rahmen 10 ausgeführt.

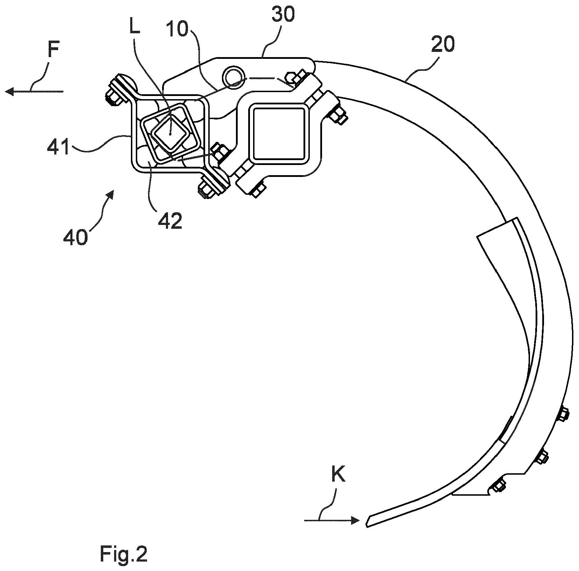

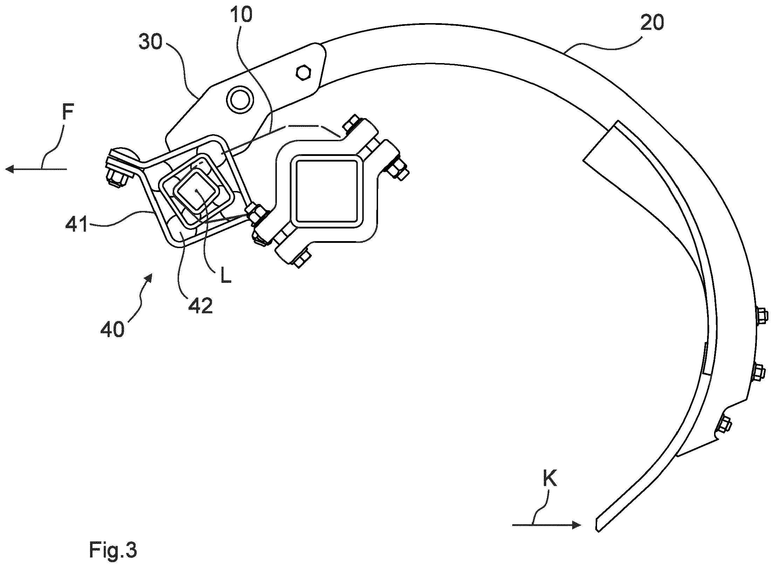

Die Fig. 2 und Fig. 3 zeigen jeweils ein Werkzeug 20 und eine Aufhängungsvorrichtung 40 in einer vorgespannten Ausgangslage und in einem verschwenkten bzw. ausgelenkten Zustand.

Eine vergrößerte Detailansicht der Aufhängungsvorrichtung 40 aus der Fig. 2 ist in der Fig. 4 gezeigt. Hierbei ist ein in Längsrichtung des ersten Lagerkörpers 41 erstreckender zweiter Lagerkörper 43 innerhalb des ersten Lagerkörpers 41 angeordnet. Dieser ist mittels der ersten Lagerelemente 42 schwenkbar um die Längsachse L gelagert. Zwischen dem zweiten Lagerkörper 43 und dem Schwenkträger 45 sind vier elastische aus Gummimaterial gebildete zweite Lagerelemente 44 angeordnet. Der zweite Lagerkörper 43 ist somit auf der einen Seite über die zweiten Lagerelemente 44 mit dem Schwenkträger 45 und auf der anderen Seite über die ersten Lagerelemente 42 mit dem ersten Lagerkörper 41 schwenkbar gekoppelt. Infolge dieser Anordnung ist sowohl der erste Lagerkörper 41 als auch der zweite Lagerkörper 43 verschwenkbar mittels der ersten und/oder zweiten Lagerelementen 42, 44 um den Schwenkträger 45 gelagert.

In einer nicht gezeigten alternativen Ausführungsform, bei der der Schwenkträger 45 mit dem Schwenkarm 20 und der erste Lagerkörper 41 mit dem Rahmen 10 verbunden sind, ist der Schwenkträger um zumindest einen der Lagerkörper 41,43 mittels der zumindest einen Lagerelemente 42, 44 schwenkbar gelagert.

Außerdem ist alternativ oder zusätzlich zu der dargestellten Ausführungsform denkbar, dass innerhalb des zweiten Lagerkörpers 43, zwischen den zweiten Lagerelementen 44 und dem Schwenkträger 45, zumindest ein weiterer um seine Längsachse L schwenkbar gelagerter Lagerkörper angeordnet ist. Darüber hinaus ist zumindest ein weiteres Lagerelement zwischen dem Schwenkträger 45 und dem zumindest einen weiteren Lagerkörper angeordnet. Somit ist das Werkzeug und/oder der erste Lagerkörper 41 alternativ oder zusätzlich mittels des zumindest einen weiteren Lagerkörper und/oder Lagerelement schwenkbar um den Schwenkträger 45 und/oder dem Rahmen 10 gelagert.

Die dargestellten Lagerkörper 41, 43 und/oder Lagerelemente 42, 44 sind erfindungsgemäß im Prinzip einer Reihenschaltung zueinander angeordnet, wobei eine Gesamtverschwenkung des Werkzeuges 20 anteilig auf die ersten und zweiten Lagerkörper 41, 43 und/oder Lagerelemente 42, 44 aufteilbar ist. Somit ist eine besonders große Verschwenkung des zumindest einen Werkzeuges 20 erreichbar, die durch das Hinzufügen von weiteren in Reihenschaltung angeordneter Lagerkörper und/oder Lagerelemente variabel erweiterbar ist.

Die in den Fig. 2 - 4 dargestellten ersten und zweiten Lagerelemente 42, 44 weisen einen in Ausgangslage im Wesentlichen kreisförmigen Querschnitt auf, mittels dessen eine besonders homogene Federkennlinie während der Verschwenkung erreicht ist. Des Weiteren ist die Federkennlinie von der Elastizität des Materials der Lagerelemente 42, 44 und der Verschwenkung, insbesondere dem Verschwenkungswinkel, der Lagerkörper 41, 43, insbesondere Lagerelemente 42,44, abhängig. Die Stabilität der Verschwenkungsbewegung ist über die längliche Form der Lagerelemente 42, 44 beeinflussbar, wobei eine besonders lange Form der Lagerelemente 42, 44 eine besonders stabile Lage der Lagerkörper 41, 43 auf den Lagerelementen 42, 44 erlaubt.

Die Lagerelemente 42, 44 können wie in der dargestellten Ausführungsform als Vollmaterial oder alternativ ringförmig, insbesondere Kreisringförmig, ausgebildet sein, wobei ein aus Vollmaterial gebildetes Lagerelement 42, 44 eine besonders lange Lebensdauer aufweist. Darüber hinaus ist außerdem ein mehreckiger und/oder polygonförmiger Querschnitt der Lagerelemente 42, 44 denkbar.

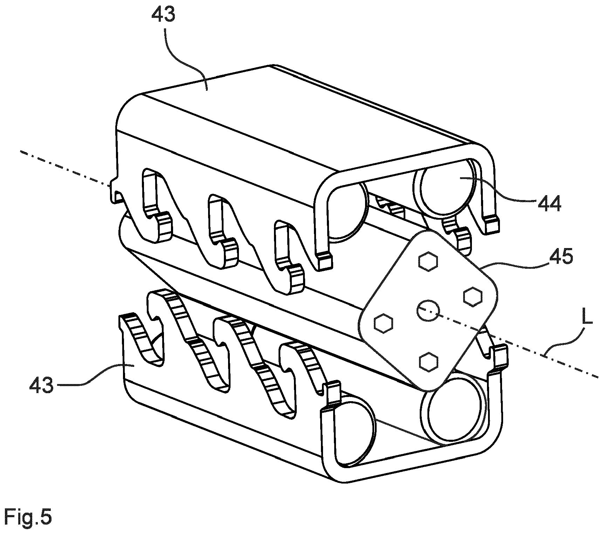

Eine weitere Ausführungsform des zumindest einen zweiten Lagerkörpers 43 ist in der Fig. 5 gezeigt. Hierbei ist der zumindest eine zweite Lagerkörper 43 mehrteilig aus zwei Schalenelementen ausgebildet die formschlüssig miteinander verbindbar sind. Alternativ oder zusätzlich hierzu können die Schalenelemente auch kraft- und/oder stoffschlüssig miteinander verbindbar sein. Hierdurch ist insbesondere die Montage und/oder Demontage des zumindest einen zweiten Lagerkörpers 43 vereinfacht. Darüber hinaus ist hierüber auch die Zugänglichkeit des zumindest einen zweiten Lagerelementes 44 verbessert.

Des Weiteren lässt sich die in der Fig. 5 gezeigte Ausführungsform des zweiten Lagerkörpers 43, insbesondere die Formschlussverbindung zwischen den Schalenelementen, auf den ersten Lagerkörper 41 und/oder den zumindest einen weiteren Lagerkörper übertragen.

Darüber hinaus ist in der Fig.5 eine alternative Ausführungsform des Schwenkträgers 45 gezeigt. Dieser weist hierbei vier Gewindebohrungen an zumindest einer seiner Stirnflächen auf. Diese dienen hierbei zur Verbindung des Schwenkträgers 45 mit dem Rahmen 10 oder dem Schwenkarm 30, insbesondere Werkzeug 20, mittels einer Schraubverbindung.

### Bezugszeichenliste

- 10: Rahmen
- 20: Werkzeug, Bodenbearbeitungswerkzeug, Zinken
- 30: Schwenkarm
- 40: Aufhängungsvorrichtung
- 41: erster Lagerkörper
- 42: erstes Lagerelement
- 43: zweiter Lagerkörper
- 44: zweites Lagerelement
- 45: Schwenkträger

- F: Fahrtrichtung
- K: Kraft
- L: Längsachse

## Patentansprüche

1. Aufhängungsvorrichtung (40) an einem Rahmen (10) eines landwirtschaftlichen Arbeitsgerätes und mit zumindest einem Schwenkarm (30), zur Aufhängung zumindest eines Werkzeuges (20), umfassend zumindest einen ersten Lagerkörper (41), und zumindest einen Schwenkträger (45), der zumindest teilweise innerhalb des ersten Lagerkörpers (41) angeordnet ist, wobei zwischen dem ersten Lagerkörper (41) und dem Schwenkträger (45) zumindest ein erstes elastisches Lagerelement (42) angeordnet ist, und wobei das zumindest eine Werkzeug (20) mittels zumindest des Schwenkarms (30) gegenüber dem zumindest einen Schwenkträger (45) schwenkbar lagerbar ist, **dadurch gekennzeichnet, dass** zumindest ein zweiter Lagerkörper (43) vorgesehen ist, der zumindest teilweise innerhalb des ersten Lagerkörpers (41) angeordnet und um seine Längsachse (L) schwenkbar gelagert ist, wobei zwischen dem Schwenkträger (45) und dem zweiten Lagerkörper (43) zumindest ein zweites elastisches Lagerelement (44) angeordnet ist.

2. Aufhängungsvorrichtung (40) nach Anspruch 1, **dadurch gekennzeichnet, dass** das zumindest eine erste Lagerelement (42) zwischen dem ersten und zweiten Lagerkörper (43) angeordnet ist, dass der zweite Lagerkörper (43) mittels des zumindest einen ersten und/oder zweiten Lagerelementes (42, 44) schwenkbar innerhalb des ersten Lagerkörpers (41) gelagert ist.

3. Aufhängungsvorrichtung (40) nach zumindest einem der vorgenannten Ansprüche, **dadurch gekennzeichnet, dass** der Schwenkträger (45) mittels des zumindest einen zweiten Lagerelementes (44), vorzugsweise schwenkbar gelagert, innerhalb des zweiten Lagerkörpers (43) angeordnet ist.

4. Aufhängungsvorrichtung (40) nach zumindest einem der vorgenannten Ansprüche, **dadurch gekennzeichnet, dass** der zumindest eine zweite Lagerkörper (43) zumindest teilweise mehrteilig, vorzugsweise aus zumindest zwei Schalenelementen, ausgebildet ist.

5. Aufhängungsvorrichtung (40) nach Anspruch 4, **dadurch gekennzeichnet, dass** die mehreren Teile, insbesondere Schalenelemente, die den zumindest einen zweiten Lagerkörper (43) bilden zumindest teilweise form- und/oder kraftschlüssig miteinander koppelbar sind.

6. Aufhängungsvorrichtung (40) nach zumindest einem der vorgenannten Ansprüche, **dadurch gekennzeichnet, dass** die Aufhängungsvorrichtung (40) zumindest einen weiteren, vorzugsweise in Längsrichtung des ersten Lagerkörpers (41) erstreckenden, Lagerkörper und zumindest ein weiteres elastisches Lagerelement, vorzugsweise aus einem Kunststoff- und/oder Gummimaterial, umfasst das vorzugsweise zumindest teilweise innerhalb des zweiten Lagerkörpers (43) angeordnet ist.

7. Aufhängungsvorrichtung (40) nach Anspruch 6, **dadurch gekennzeichnet, dass** der zumindest eine weitere Lagerkörper zwischen dem zweiten Lagerkörper (43) und dem Schwenkträger (45) angeordnet und um seine Längsachse (L) schwenkbar gelagert ist.

8. Aufhängungsvorrichtung (40) nach zumindest einem der vorgenannten Ansprüche, **dadurch gekennzeichnet, dass** zumindest ein Lagerelement (42, 44) zumindest teilweise einen im Wesentlichen kreisförmigen Querschnitt aufweist und vorzugsweise länglich ausgebildet ist.

9. Aufhängungsvorrichtung (40) nach zumindest einem der vorgenannten Ansprüche 1 - 7, **dadurch gekennzeichnet, dass** zumindest ein Lagerelement (42, 44) im Querschnitt gesehen polygonförmig, insbesondere dreiecksförmig, ausgebildet ist, dass die Scheitel, insbesondere Eckpunkte, zumindest teilweise abgerundet sind.

10. Aufhängungsvorrichtung (40) nach zumindest einem der vorgenannten Ansprüche, **dadurch gekennzeichnet, dass** zumindest ein Lagerelement (42, 44) in Abhängigkeit seiner Elastizität und der Verschwenkung des zumindest einen mit der Aufhängungsvorrichtung (40) gekoppelten Werkzeuges (20) elastisch verformbar ist.

11. Aufhängungsvorrichtung (40) nach zumindest einem der vorgenannten Ansprüche, **dadurch gekennzeichnet, dass** der Schwenkarm (30) über den ersten Lagerkörper (41) mit der Aufhängungsvorrichtung (40) gekoppelt ist.

12. Aufhängungsvorrichtung (40) nach zumindest einem der vorgenannten Ansprüche 1 - 10, **dadurch gekennzeichnet, dass** der Schwenkarm (30) über den Schwenkträger (45) mit der Aufhängungsvorrichtung (40) gekoppelt ist.

13. Aufhängungsvorrichtung (40) nach zumindest einem der vorgenannten Ansprüche, **dadurch gekennzeichnet, dass** der erste Lagerkörper (41) aus zumindest zwei Schalenelementen gebildet ist.

14. Aufhängungsvorrichtung (40) nach zumindest einem der vorgenannten Ansprüche, **dadurch gekennzeichnet, dass** das erste und zweite Lagerelement (42, 44) aus einem Kunststoff- und/oder Gummimaterial ausgebildet sind.

15. Landwirtschaftliches Arbeitsgerät mit zumindest einem Rahmen (10) und zumindest einem Werkzeug (20), insbesondere Bodenbearbeitungswerkzeug, wobei das Werkzeug (20) mittels zumindest einer Aufhängungsvorrichtung (40) schwenkbar gegenüber dem Rahmen (10) angeordnet ist, **dadurch gekennzeichnet, dass** die Aufhängungsvorrichtung (40) nach einem der vorstehenden Ansprüche ausgeführt ist.

## Claims

1. Suspension device (40) on a frame (10) of an agricultural implement and comprising at least one pivot arm (30), for the suspension of at least one tool (20), comprising at least a first bearing body (41), and at least one pivot support (45) which is arranged at least in part within the first bearing body (41), at least a first elastic bearing element (42) being arranged between the first bearing body (41) and the pivot support (45), and the at least one tool (20) being pivotally mountable relative to the at least one pivot support (45) by means of at least the pivot arm (30), **characterized in that** at least a second bearing body (43) is provided, which is arranged at least in part within the first bearing body (41) and is pivotally mounted about its longitudinal axis (L), at least a second elastic bearing element (44) being arranged between the pivot support (45) and the second bearing body (43).

2. Suspension device (40) according to claim 1, **characterized in that** the at least a first bearing element (42) is arranged between the first and the second bearing body (43), and **in that** the second bearing body (43) is pivotally mounted within the first bearing body (41) by means of the at least a first and/or second bearing element (42, 44).

3. Suspension device (40) according to at least one of the preceding claims, **characterized in that** the pivot support (45) is arranged within the second bearing body (43), preferably so as to be pivotally mounted, by means of the at least a second bearing element (44).

4. Suspension device (40) according to at least one of the preceding claims, **characterized in that** the at least a second bearing body (43) is formed, at least in part, in multiple parts, preferably from at least two shell elements.

5. Suspension device (40) according to claim 4, **characterized in that** the multiple parts, in particular shell elements, which form the at least a second bearing body (43) can be interlockingly and/or frictionally coupled to one another at least in part.

6. Suspension device (40) according to at least one of the preceding claims, **characterized in that** the suspension device (40) comprises at least one further bearing body, preferably extending in the longitudinal direction of the first bearing body (41), and at least one further elastic bearing element, preferably made of a plastics material and/or rubber material, which is preferably arranged at least in part within the second bearing body (43).

7. Suspension device (40) according to claim 6, **characterized in that** the at least one further bearing body is arranged between the second bearing body (43) and the pivot support (45) and is pivotally mounted about its longitudinal axis (L).

8. Suspension device (40) according to at least one of the preceding claims, **characterized in that** at least one bearing element (42, 44) has, at least in part, a substantially circular cross section and is preferably elongate.

9. Suspension device (40) according to at least one of the preceding claims 1-7, **characterized in that** at least one bearing element (42, 44) is designed to be polygonal, in particular triangular, as seen in cross section, and **in that** the vertices, in particular corner points, are at least partially rounded.

10. Suspension device (40) according to at least one of the preceding claims, **characterized in that** at least one bearing element (42, 44) is elastically deformable according to its elasticity and the pivoting of the at least one tool (20) coupled to the suspension device (40).

11. Suspension device (40) according to at least one of the preceding claims, **characterized in that** the pivot arm (30) is coupled to the suspension device (40) via the first bearing body (41).

12. Suspension device (40) according to at least one of the preceding claims 1-10, **characterized in that** the pivot arm (30) is coupled to the suspension device (40) via the pivot support (45).

13. Suspension device (40) according to at least one of the preceding claims, **characterized in that** the first bearing body (41) is formed from at least two shell elements.

14. Suspension device (40) according to at least one of the preceding claims, **characterized in that** the first and the second bearing element (42, 44) are formed of a plastics material and/or rubber material.

15. Agricultural implement comprising at least one frame (10) and at least one tool (20), in particular a farming tool, the tool (20) being arranged pivotally relative to the frame (10) by means of at least one suspension device (40),
**characterized in that** the suspension device (40) is designed according to any of the preceding claims.

## Revendications

1. Dispositif de suspension (40) sur un cadre (10) d'un appareil de travail agricole et comportant au moins un bras pivotant (30), destiné à la suspension d'au moins un outil (20), comprenant au moins un premier corps de palier (41) et au moins un support pivotant (45) qui est disposé au moins partiellement à l'intérieur du premier corps de palier (41), dans lequel au moins un premier élément de palier (42) élastique est disposé entre le premier corps de palier (41) et le support pivotant (45) et dans lequel l'au moins un outil (20) peut être monté de manière à pouvoir pivoter par rapport à l'au moins un support pivotant (45) au moyen d'au moins le bras pivotant (30), **caractérisé en ce qu'**au moins un second corps de palier (43) est prévu, lequel est disposé au moins partiellement à l'intérieur du premier corps de palier (41) et monté de manière à pouvoir pivoter autour de son axe longitudinal (L), dans lequel au moins un second élément de palier (44) élastique est disposé entre le support pivotant (45) et le second corps de palier (43).

2. Dispositif de suspension (40) selon la revendication 1,
**caractérisé en ce que** l'au moins un premier élément de palier (42) est disposé entre le premier et le second corps de palier (43), **en ce que** le second corps de palier (43) est monté de manière à pouvoir pivoter à l'intérieur du premier corps de palier (41) au moyen de l'au moins un premier et/ou second élément de palier (42, 44).

3. Dispositif de suspension (40) selon au moins l'une des revendications susmentionnées, **caractérisé en ce que** le support pivotant (45) est disposé, de préférence monté de manière à pouvoir pivoter, à l'intérieur du second corps de palier (43) au moyen de l'au moins un second élément de palier (44).

4. Dispositif de suspension (40) selon au moins l'une des revendications susmentionnées, **caractérisé en ce que** l'au moins un second corps de palier (43) est conçu au moins partiellement en plusieurs parties, de préférence en au moins deux éléments de coque.

5. Dispositif de suspension (40) selon la revendication 4,
**caractérisé en ce que** les plusieurs parties, en particulier les éléments de coque, qui forment l'au moins un second corps de palier (43) peuvent être accouplées au moins partiellement l'une à l'autre par complémentarité de forme et/ou à force.

6. Dispositif de suspension (40) selon au moins l'une des revendications susmentionnées, **caractérisé en ce que** le dispositif de suspension (40) comprend au moins un autre corps de palier s'étendant de préférence dans la direction longitudinale du premier corps de palier (41) et au moins un autre élément de palier élastique, de préférence en un matériau synthétique et/ou en caoutchouc, qui est disposé de préférence au moins partiellement à l'intérieur du second corps de palier (43).

7. Dispositif de suspension (40) selon la revendication 6,
**caractérisé en ce que** l'au moins un autre corps de palier est disposé entre le second corps de palier (43) et le support pivotant (45) et monté de manière à pouvoir pivoter autour de son axe longitudinal (L).

8. Dispositif de suspension (40) selon au moins l'une des revendications susmentionnées, **caractérisé en ce qu'au** moins un élément de palier (42, 44) présente au moins partiellement une section transversale sensiblement circulaire et est de préférence conçu de manière allongée.

9. Dispositif de suspension (40) selon au moins l'une des revendications susmentionnées 1 à 7, **caractérisé en ce qu'au** moins un élément de palier (42, 44) est conçu, vu en section transversale, sous forme polygonale, en particulier sous forme triangulaire, **en ce que** les sommets, en particulier les points d'angle, sont au moins partiellement arrondis.

10. Dispositif de suspension (40) selon au moins l'une des revendications susmentionnées, **caractérisé en ce qu'au** moins un élément de palier (42, 44) est élastiquement déformable en fonction de son élasticité et du pivotement de l'au moins un outil (20) accouplé au dispositif de suspension (40).

11. Dispositif de suspension (40) selon au moins l'une des revendications susmentionnées, **caractérisé en ce que** le bras pivotant (30) est accouplé au dispositif de suspension (40) par l'intermédiaire du premier corps de palier (41).

12. Dispositif de suspension (40) selon au moins l'une des revendications susmentionnées 1 à 10, **caractérisé en ce que** le bras pivotant (30) est accouplé au dispositif de suspension (40) par l'intermédiaire du support pivotant (45).

13. Dispositif de suspension (40) selon au moins l'une des revendications susmentionnées, **caractérisé en ce que** le premier corps de palier (41) est formé d'au moins deux éléments de coque.

14. Dispositif de suspension (40) selon au moins l'une des revendications susmentionnées, **caractérisé en ce que** le premier et le second élément de palier (42, 44) sont conçus à partir d'un matériau synthétique et/ou en caoutchouc.

15. Appareil de travail agricole comportant au moins un cadre (10) et au moins un outil (20), en particulier un outil de traitement du sol, dans lequel l'outil (20) est disposé de manière à pouvoir pivoter par rapport au cadre (10) au moyen d'au moins un dispositif de suspension (40), **caractérisé en ce que** le dispositif de suspension (40) est réalisé selon l'une quelconque des revendications précédentes.
